# EUROPEAN PATENT APPLICATION

(11) **EP 4 471 309 A1**
(43) Date of publication of application: **04.12.2024**
(21) Application number: 24179485.8
(22) Date of filing: 03.06.2024
(51) Int. Cl.: F16K 27/12, F16K 31/04, F16K 49/00, H02K 5/02, H02K 5/08

(54) **INSULATED ACTUATOR HOUSING**

(30) Priority: 01.06.2023 US 202318204564
(71) Applicant: Hamilton Sundstrand Corporation, Charlotte, NC 28217-4578 (US)
(72) Inventor: LAM, David, Tolland, CT 06084 (US); SALTZMAN, David, Glastonbury, CT 06033 (US)
(74) Representative: Dehns

(57) **Abstract**

An actuator assembly includes an actuator and an actuator housing (13). The actuator includes a main body portion and an actuator shaft (23). The actuator housing encloses the main body portion of the actuator. The actuator housing includes an outer layer (34), an inner ceramic fiber layer (36), an interior chamber (42) that is bounded by the inner ceramic fiber layer, one or more inflow vents (38) for receiving a first fluid, and one or more outflow vents (40) for discharging the first fluid from the actuator housing.

## Description

### BACKGROUND

The present disclosure relates generally to actuators, and more specifically to actuator housings for insulating actuators.

A variety of machines, such as engines, may include valves for controlling various operations involving fluid flow (e.g., fuel flow, bleed air flow, etc.). The position of a valve can be adjusted by an actuator to control fluid flow. There are several different types of actuators that can be coupled to valves (or other movable components), including mechanically, pneumatically, hydraulically, and electrically activated actuators. To actuate a valve, an actuator may need to be implemented in a harsh operating environment. For example, in an aircraft, an actuator may be mounted to the aircraft engine or airframe.

### SUMMARY

In one example, an actuator assembly includes an actuator and an actuator housing. The actuator includes a main body portion and an actuator shaft. The actuator housing encloses the main body portion of the actuator. The actuator housing includes an outer layer, an inner ceramic fiber layer, an interior chamber that is bounded by the inner ceramic fiber layer, one or more inflow vents for receiving a first fluid, and one or more outflow vents for discharging the first fluid from the actuator housing.

In another example, a valve actuation system includes a valve arranged in a fluid flow path, the valve being movable between an open position and a closed position, an actuator, and an actuator housing. The actuator includes a main body portion and an actuator shaft that is coupled to the valve such that the actuator is configured to move the valve between the open position and the closed position. The actuator housing encloses the main body portion of the actuator. The actuator housing includes an outer layer, an inner ceramic fiber layer, an interior chamber that is bounded by the inner ceramic fiber layer, one or more inflow vents for receiving a first fluid, and one or more outflow vents for discharging the first fluid from the actuator housing.

In another example, a method of thermally insulating an electric actuator includes constructing an actuator housing. The actuator housing includes an outer layer, an inner ceramic fiber layer, an interior chamber that is bounded by the inner ceramic fiber layer, one or more inflow vents for receiving a first fluid, and one or more outflow vents for discharging the first fluid from the actuator housing. The method further includes enclosing a main body portion of the electric actuator within the actuator housing and connecting the actuator housing to a valve housing.

### BRIEF DESCRIPTION OF THE DRAWINGS

FIG. 1 is a schematic block diagram showing an actuation system including an actuator assembly connected to a valve assembly.
FIG. 2A is a schematic cross-sectional side view of a first example of the actuator assembly.
FIG. 2B is a schematic front view of the first example of the actuator assembly showing an inflow vent.
FIG. 3 is a schematic cross-sectional side view of a second example of the actuator assembly.
FIG. 4 is a schematic cross-sectional side view of a third example of the actuator assembly.

### DETAILED DESCRIPTION

Electric actuators may be more sensitive to, or even inoperable in, higher temperature operating environments compared to mechanical, pneumatic, and hydraulic actuators. The reliability and/or life span of electric actuators may be hindered by the harsh operating environments that may be present in an engine compartment or other area where the electric actuator is implemented, which may include exposure to high ambient temperatures and temperature fluctuations. For example, the electronics of current commercial electric actuators may be compromised at high temperatures, such as temperatures at or above about 800°F (426.67°C).

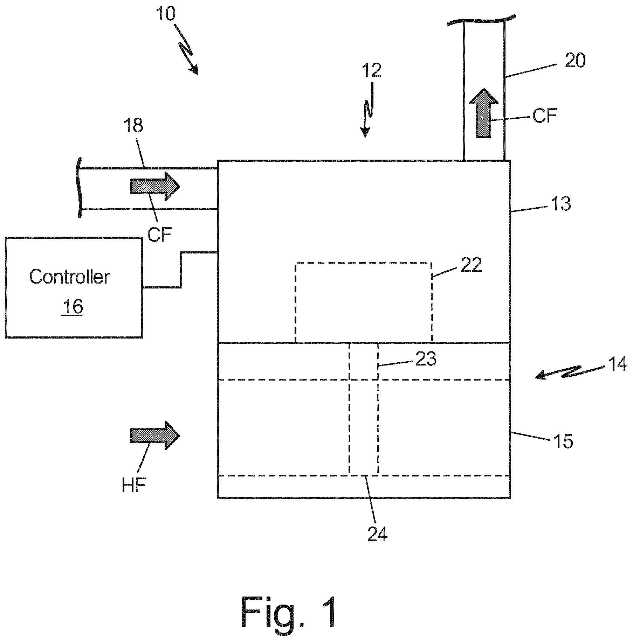

An actuator housing according to techniques of this disclosure includes an inner ceramic fiber insulation layer and a vent for a cooling fluid, such as air, to be channeled through the interior of the actuator housing to insulate an electric actuator from a high temperature environment. The actuator housing relies on light weight, low cost, and readily machinable materials. Actuation systems and actuator assemblies including the actuator housing with the inner ceramic fiber insulation layer and vent according to techniques of this disclosure are described below with reference to FIGS. 1-4.

FIG. 1 is a schematic block diagram showing actuation system 10 including actuator assembly 12 connected to valve assembly 14. As illustrated in FIG. 1, actuation system 10 includes actuator assembly 12 (including actuator housing 13), valve assembly 14 (including valve housing 15), controller 16, inflow duct 18, and outflow duct 20. Actuator assembly 12 further includes actuator 22, which includes actuator shaft 23. Valve assembly 14 further includes valve 24. FIG. 1 also shows cooling flow path CF and hot flow path HF.

Actuation system 10 is a valve actuation system that includes actuator assembly 12 and valve assembly 14. In some examples, actuation system 10 is implemented in an aircraft or other vehicle. In some examples, actuation system 10 can be mounted on an engine, such as a gas turbine engine, or an airframe. Gas turbine engines may generally include a fan section, a compressor section, a combustor section, and a turbine section, among other components. The gas turbine engine may be a two-spool or a three-spool architecture or any desired type of gas turbine engine known in the art. However, it should be understood that actuation system 10 is not limited to gas turbine engine or aircraft applications, and, although generally described herein as such for convenience, actuation system 10 may be utilized in various other machines having fluid management systems or assemblies. More generally, actuation system 10 is configured to be implemented in a high temperature environment. In some examples, an ambient temperature in actuation system 10 (i.e., a temperature of the air surrounding actuator assembly 12 and valve assembly 14) can be about 800°F (426.67°C) or above.

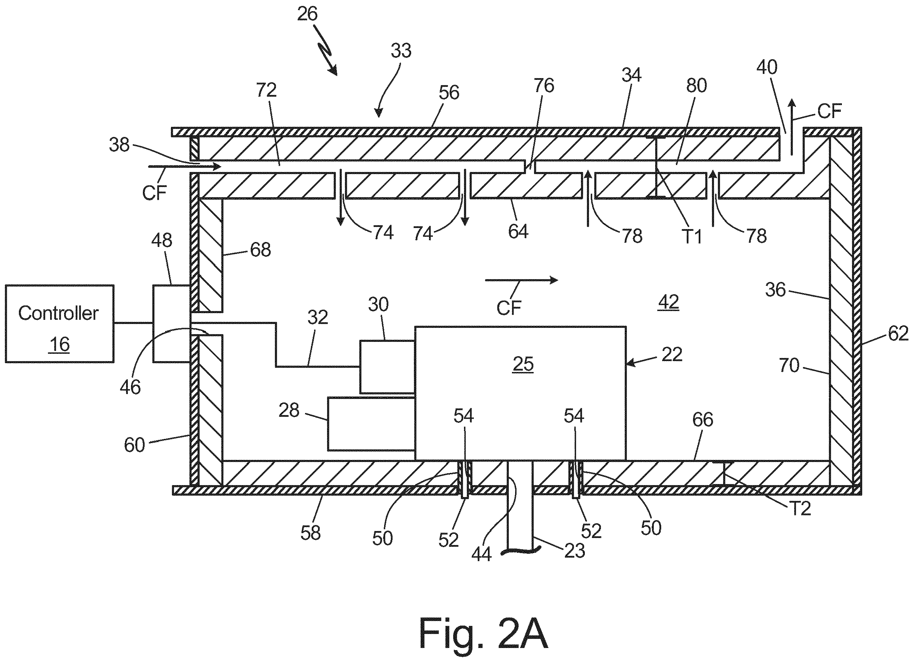

Actuation system 10 includes actuator assembly 12. As shown in FIG. 1, actuator assembly 12 includes actuator housing 13 and actuator 22. Actuator housing 13 is a walled structure that contains and encloses a main body portion of actuator 22 and other components of actuator 22. Although depicted schematically as a box, actuator housing 13 can have any suitable three-dimensional shape for containing actuator 22. For example, actuator housing 13 can have a regular or irregular shape, depending on the available space in the particular application. As will be described in greater detail below with reference to FIGS. 2A-2B, actuator housing 13 can be constructed of multiple layers, including a ceramic fiber insulation layer. As shown in FIG. 1, actuator housing 13 is adjacent to valve housing 15. In some examples, actuator housing 13 directly contacts and is connected to valve housing 15. Actuator housing 13 is also connected to inflow duct 18 and outflow duct 20.

Inflow duct 18 and outflow duct 20 are pipes, tubes, or other passageways for containing a fluid flowing into or out of actuator housing 13. Inflow duct 18 provides cooling flow path CF entering actuator housing 12. Outflow duct 20 provides cooling flow path CF exiting actuator housing 13 from a generally opposite side (or half) of actuator housing 13. That is, inflow duct 18 is connected to a first side of actuator housing 13, and outflow duct 20 is connected to a second (and generally opposite) side of actuator housing 13. Although inflow duct 18 and outflow duct 20 are depicted schematically in FIG. 1 as being oriented at about ninety degrees with respect to each other, other examples can include inflow duct 18 and outflow duct 20 connected at any locations on generally opposite sides or halves of actuator housing 13 in any desired orientations.

Inflow duct 18 can receive a cooling fluid, such as air, that flows along cooling flow path CF from a variety of sources. In one example, the cooling fluid can be bleed air from an aircraft engine. In another example, the cooling fluid can be air at atmospheric temperature from outside an aircraft that is ducted inside. Generally, the cooling fluid can be sourced from any source of a relatively lower temperature fluid (compared to the ambient temperature in actuation system 10) that is available for actuation system 10. In some examples, the cooling fluid can be approximately 60°F (15.56°C).

Actuator 22 is illustrated in FIG. 1 with dashed lines to indicate actuator 22 is contained within actuator housing 13. Actuator 22 is an electric actuator. Actuator 22 is operably attached or coupled to valve 24 by actuator shaft 23. Actuator shaft 23 is also illustrated in FIG. 1 with dashed lines to indicate actuator shaft 23 is at least partially contained within actuator housing 13 and/or valve housing 15. That is, a portion of actuator shaft 23 can be contained within actuator housing 13, and a portion of actuator shaft 23 can also be contained within valve housing 15. For example, actuator shaft 23 can extend through an opening in actuator housing 13 into an opening in valve housing 15 to interact with valve 24. Actuator shaft 23 is coupled to valve 24 such that actuator 22 can move valve 24 between an open position and a closed position.

Actuator 22 is communicatively coupled to controller 16. Controller 16 is configured to implement process instructions for operational control of actuator 22. For instance, controller 16 can include one or more processors and computer-readable memory configured to implement functionality and/or process instructions for execution within actuation system 10. Examples of one or more processors can include, e.g., any one or more of a microprocessor, a controller, a digital signal processor (DSP), an application specific integrated circuit (ASIC), a field-programmable gate array (FPGA), or other equivalent discrete or integrated logic circuitry.

Computer-readable memory of controller 16 can be configured to store information used by controller 16 during operation of actuator 22. Computer-readable memory, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, the computer-readable memory is used to store program instructions for execution by the one or more processors. Computer-readable memory, in one example, is used by software or applications running on controller 16 to temporarily store information during program execution. Computer-readable memory can include volatile and non-volatile memories. Examples of volatile memories can include, e.g., random access memories (RAM), dynamic random access memories (DRAM), static random access memories (SRAM), and other forms of volatile memories. Examples of non-volatile storage elements can include, for example, magnetic hard discs, optical discs, flash memories, or forms of electrically programmable memories (EPROM) or electrically erasable and programmable (EEPROM) memories.

Examples of controller 16 can include any one or more of programmable logic controllers or other computers. Controller 16 can be configured to communicate with actuator 22 and/or any one or more of the individual components of actuator 22 or actuator assembly 12. Though the example shown in FIG. 1 illustrates controller 16 as operatively coupled to actuator 22 in actuation system 10, it should be understood that in other examples, controller 16 can be integrated with actuator 22 (or actuator housing 13) to communicate with the components of actuator 22. In yet other examples, controller 16 can include more than one controller device that can be coupled to or integrated with actuator 22 to communicate with the components of actuator 22.

Actuation system 10 also includes valve assembly 14. As shown in FIG. 1, valve assembly 14 includes valve housing 15 and valve 24. Valve housing 15 is a structure that contains valve 24. Although depicted schematically as a box, valve housing 15 can have any suitable three-dimensional shape for containing valve 24. Valve housing 15 can also contain other components associated with valve 24. Additionally, valve housing 15 can contain a portion of actuator shaft 23 that extends from or between actuator housing 13 into valve housing 15. As shown in FIG. 1, valve housing 15 is adjacent to actuator housing 13. In some examples, valve housing 15 directly contacts and is connected to actuator housing 13.

Valve 24 is illustrated in FIG. 1 with dashed lines to indicate valve 24 is contained within valve housing 15. Valve 24 can be any suitable valve type, e.g., for high temperature implementations, that can be actuated by actuator 22. Valve 24 is coupled to actuator shaft 23. Valve 24 is movable between an open position and a closed position to permit or prevent fluid passage through valve 24. More specifically, valve 24 is arranged or positioned along hot flow path HF. As shown in FIG. 1, hot flow path HF generally coincides with a longitudinal axis through valve 24 (not shown). Hot flow path HF is depicted schematically in FIG. 1 as a straight path, but other examples could include curved or other variations of hot flow path HF. In such examples, valve 24 could also be curved or have a different shape. The direction of fluid flow along hot flow path HF (represented by the corresponding arrow in FIG. 1) is arbitrary in that actuation system 10 could also be configured such that fluid flows in an opposite direction through valve 24. Valve 24 can be configured to meter a high temperature fluid that flows along hot flow path HF. The high temperature fluid can have a higher temperature than both the cooling fluid that flows along cooling flow path CF and an internal temperature of actuator housing 13.

In operation, the high temperature fluid flows along hot flow path HF and enters valve 24. Controller 16 communicates a control signal to actuator 22. In response to the control signal from controller 16, actuator 22 transfers energy to valve 24 via actuator shaft 23 to move valve 24 between the open position and the closed position. When valve 24 is in the open position (at various degrees), the high temperature fluid is permitted to pass through valve 24 flow to a downstream component (not shown). When valve 24 is in the closed position, the high temperature fluid is prevented from passing through valve 24. As valve 24 is actuated, a lower temperature cooling fluid flows from a source (not shown) along cooling flow path CF within inflow duct 18. The cooling fluid enters actuator housing 13 from inflow duct 18 and regulates (i.e., cools) an interior of actuator housing 13, including actuator 22. Cooling fluid that enters actuator housing 13 pushes relatively higher temperature fluid that has been heated up within actuator housing 13 out so that fluid is discharged from actuator housing 13 via outflow duct 20.

Typically, aircraft applications for actuating a valve may require different actuators-one type for high temperature environments and another type for lower temperature environments. Actuators specifically designed for high temperature environments may need to have pneumatic or other controls to withstand the high temperature environment, generally making these types of actuators heavier, whereas lighter-weight electric actuators may typically be used in lower temperature environments.

Conventional approaches for using electric actuators in higher temperature environments are limited in several ways. One conventional approach is to physically separate the electric actuator from a high temperature valve, such as by adding some sort of intermediate separator structure, like a post, for example, to space the actuator and valve apart, or by remotely mounting the electric actuator in a lower temperature location away from the valve. Remotely mounting the actuator would require running connections to the remote locations, which add weight to the system. Another conventional approach is to provide an insulation layer between the actuator (or actuator housing) and the valve. Physically separating the electric actuator from the valve, either with a structural separator or with external insulation, is limited in that this only protects the electric actuator from a localized high temperature exposure, such as exposure to a hot component like the valve. Physically separating the electric actuator in the conventional manner does not generally protect the actuator from high ambient temperatures. Remotely mounting the electric actuator is also limited in that this would require a more complicated assembly to remotely run connections and would also add weight, which may be a significant limiting factor in compact applications, such as in aircraft.

Actuator housing 13 accomplishes both protecting actuator 22 from high temperature valve 24 and protecting actuator 22 from high ambient temperatures within actuation system 10. Accordingly, actuator housing 13 allows for the use of lightweight electric actuators typically designed for relatively lower temperatures (e.g., BLDC actuators) in both high and low temperature environments. In this way, a standard or common electric actuator can be used throughout and across applications rather than requiring different actuators for different environments. Using a standard electric actuator can be cost-effective and allow for design consistency in applications. Moreover, actuator assembly 12, including actuator housing 13, can be mounted directly to valve housing 15 (or other hot components). As such, actuator assembly 12 and valve assembly 14 can be pre-assembled before installation and can use an off-the-shelf electric actuator because no custom assembly or complex connections to a remote location as would otherwise be required with conventional setups are needed.

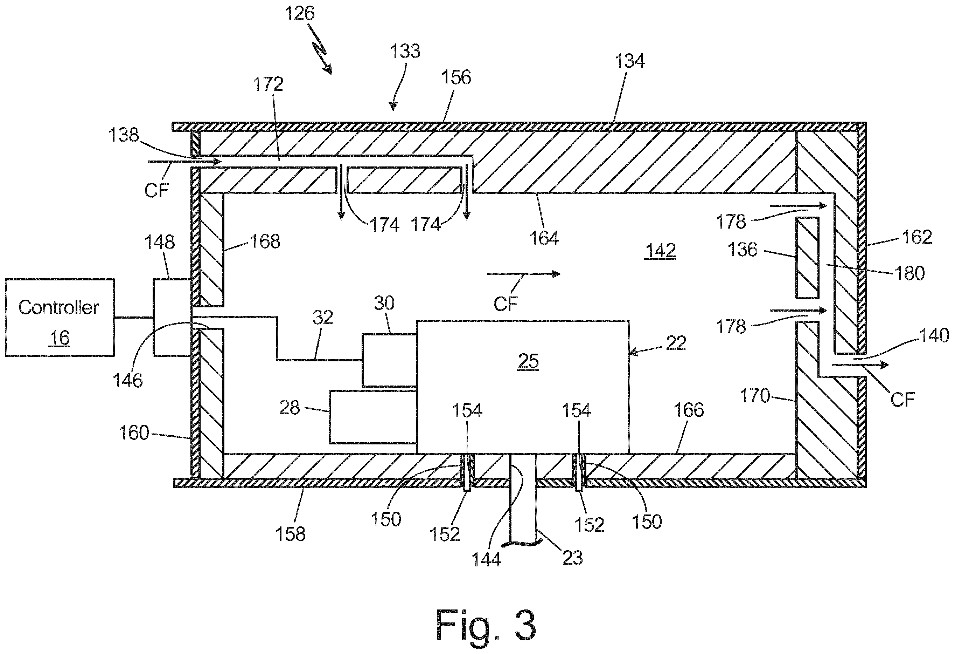

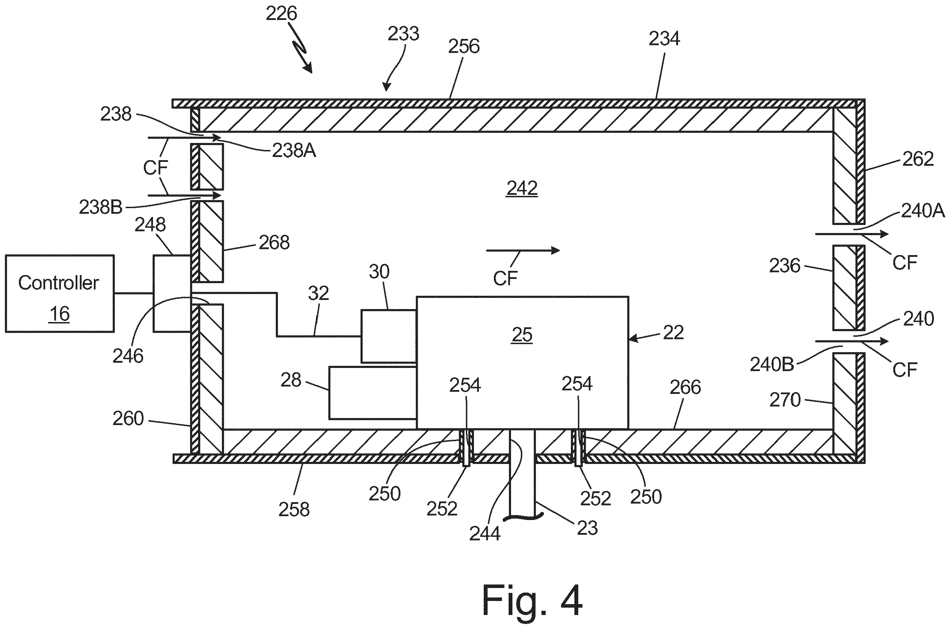

Several examples of actuator assemblies according to techniques of this disclosure will be described with reference to FIGS. 2A-4. Each of the actuator assembly examples shown in FIGS. 2A-4 is an example of actuator assembly 12, as shown in FIG. 1. Additionally, each of the actuator assembly examples shown in FIGS. 2A-4 also includes several generally similar components, which share the same name, and which are identified by shared reference numbers that are increased incrementally between examples (e.g., FIGS. 2A-2B include actuator housing 33, FIG. 3 includes actuator housing 133, and FIG. 4 includes actuator housing 233). In the following examples, identical reference numbers are used to denote the same feature. For simplicity, some details of the same or similar features shown in FIGS. 2A-4 may not be repeated in each of the following sections, but it should be understood that the actuator assembly examples shown in FIGS. 2A-4 can include all or any combination of the components and features described herein. Moreover, although illustrated in FIGS. 2A-4 as separate examples, an actuation system or actuator assembly according to techniques of this disclosure can generally include any combination of the following features.

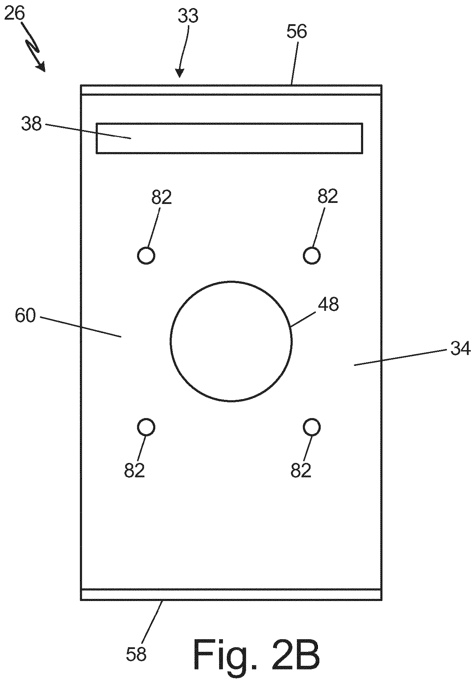

FIG. 2A is a schematic cross-sectional side view of actuator assembly 26. FIG. 2B is a schematic front view of actuator assembly 26 showing inflow vent 38. FIGS. 2A-2B will be described together. FIG. 2A shows controller 16 and actuator assembly 26, which includes actuator 22 and actuator housing 33. Actuator 22 includes actuator shaft 23, main body 25, motor 28, connector terminal 30, and electrical connector 32. Actuator housing 33 includes outer layer 34, inner layer 36, inflow vent 38, outflow vent 40, interior chamber 42, actuator shaft opening 44, connector opening 46, connector receptacle 48, fastener openings 50, and fasteners 52 (including sleeves 54). FIG. 2A shows first (or top) side 56, second (or bottom) side 58, third (or front) side 60, and fourth (or rear) side 62 of actuator housing 33. Inner layer 36 also includes first (or top) portion 64, second (or bottom) portion 66, third (or front) portion 68, and fourth (or rear) portion 70. First portion 64 further includes inflow vent channel 72, inflow vent openings 74, divider portion 76, outflow vent openings 78, and outflow vent channel 80. FIG. 2A also shows cooling flow path CF, first thickness T1, and second thickness T2. FIG. 2B shows actuator housing 26 (including first side 56, second side 58, and third side 60), outer layer 34, inflow vent 38, connector receptacle 48, and fasteners 82.

Actuator assembly 26 is an example of actuator assembly 12, and actuator housing 33 is an example of actuator housing 13, as shown in FIG. 1. Actuator assembly 26 includes actuator 22 and actuator housing 33. Actuator 22 is generally as described above with reference to FIG. 1. Main body 25 is a main structural portion of actuator 22. Main body 25 can include other internal components of actuator 22. As illustrated in FIG. 2A, main body 25 is a portion of actuator 22 that is contained within actuator housing 33. In some examples, main body 25 is entirely enclosed within actuator housing 33. Main body 25 is connected to actuator shaft 23, motor 28, and connector terminal 30, which is in turn connected to electrical connector 32. Motor 28 and connector terminal 30 are also contained within actuator housing 33. In one example, motor 28 is a brushless direct current (BLDC) motor. It should be appreciated that the arrangement of motor 28 and connector terminal 30 shown in FIG. 2A is one non-limiting example, and actuator 22 can have various other configurations with motor 28 and connector terminal 30 arranged in different positions with respect to main body 25.

Connector terminal 30 receives electrical connector 32 (or multiple electrical connectors 32) configured for wired connection (e.g., electrical and/or communicative connection) between actuator 22 and one or more peripheral components, including controller 16. One such connection can be to supply power to actuator 22. Another connection can be to communicate control signals from controller 16 to actuator 22. In some examples, electrical connector 32 includes one or more wires that connect from connector terminal 30 of actuator 22 to connector receptacle 48. That is, electrical connector 32 passes through connector opening 46 in actuator housing 33 to reach connector receptacle 48 outside of actuator housing 33. In some examples, connector opening 46 is sealed around electrical connector 32. In some examples, connector receptacle 48 seals connector opening 46 around electrical connector 32.

As shown in FIG. 2B, connector receptacle can be attached to actuator housing 33 by fasteners 82. FIG. 2B shows four fasteners 82; however, other examples can include any desired number of fasteners 82, such as more or fewer fasteners 82. Fasteners 82 can be bolts or any other suitable mechanism for securing connector receptacle 48 to actuator housing 33. In the example shown in FIG. 2B, connector receptacle 48 is connected to third side 60 of actuator housing 33. In other examples, connector opening 46 can be on a different side of actuator housing 33, and connector receptacle 48 can likewise be connected to a different side of actuator housing 33. Connector receptacle 48 can include subsequent electrical connections to controller 16 or other peripheral components (e.g., extending from or connected to electrical connector 32 as continuations of electrical connector 32). That is, connector receptacle 48 maintains electrical connections from actuator 22 to controller 16 at the transition from interior to exterior with respect to actuator housing 33. In some examples, controller 16 is local to actuator assembly 26 and is positioned nearby in actuation system 10. In other examples, controller 16 is a remote controller located away from actuator assembly 26. In some examples, some of the connections represented by electrical connector 32, such as between connector receptacle 48 and controller 16, can be wireless.

Actuator shaft 23 is generally as described above with reference to FIG. 1. As shown in FIG. 2A, actuator shaft 23 extends from main body 25 of actuator 22. Actuator shaft 23 extends through actuator shaft opening 44 in second side 58 of actuator housing 33. In some examples, actuator shaft opening 44 can be sealed around actuator shaft 23. Actuator shaft 23 can be coupled to a valve (e.g., valve 24, as shown in FIG. 1) at an opposite end from the end that is connected to main body 25. As shown in FIG. 2A, a portion of actuator shaft 23 can extend outside of actuator housing 33 (although this portion may be contained inside a valve housing that is adjacent to actuator housing 33, such as valve housing 15, as shown in FIG. 1).

FIG. 2A shows first (or top) side 56, second (or bottom) side 58, third (or front) side 60, and fourth (or rear) side 62 of actuator housing 33. It should be appreciated that "top," "bottom," "front," and "rear" designations used herein refer to the orientation of actuator housing 33 in FIGS. 2A-2B and are used for convenience but could be different in other implementations. Additionally, actuator housing 33 can include any number of sides (in addition to the four shown) to complete a three-dimensional enclosure around actuator 22.

First side 56 and second side 58 form opposite sides of actuator housing 33 in one direction (top to bottom in FIG. 2A), and third side 60 and fourth side 62 form opposite sides of actuator housing 33 in another direction (left to right in FIG. 2A). First side 56 includes outflow vent 40. Second side 58 includes actuator shaft opening 44 and fastener openings 50. Additionally, second side 58 is a side of actuator housing 33 that is connected to an adjacent valve housing (e.g., valve housing 15, as shown in FIG. 1). In some examples, second side 58 can directly contact an exterior surface of the adjacent valve housing. Fasteners 52 are in fastener openings 50 in second side 58 to attach or secure main body 25 of actuator 22 to actuator housing 33. FIG. 2A shows two fasteners 52; however, other examples can include any desired number of fasteners 52, such as more or fewer fasteners 52. Fasteners 52 can be bolts or any other suitable mechanism for securing actuator 22 to actuator housing 33. In some examples, fasteners 52 may also secure actuator 22 to an adjacent valve housing or other external component. In the example shown in FIG. 2A, fasteners 52 include corresponding sleeves 54 for structural support within fastener openings 50 to prevent the respective fastener opening 50 from collapsing. For example, sleeves 54 can be metal sleeves or collars around fasteners 52. Alternatively, fasteners 52 do not include sleeves 54. Third side 60 of actuator housing 33 includes connector opening 46 and inflow vent 38. In the example shown in FIG. 2A, fourth side 62 does not include openings. It should be appreciated that the dimensions of actuator housing 33 defined by first side 56, second side 58, third side 60, and fourth side 62, including relative dimensions with respect to actuator 22, can vary depending on the application.

Actuator housing 33 includes inflow vent 38 and outflow vent 40. Each of inflow vent 38 and outflow vent 40 is an opening through actuator housing 33. Inflow vent 38 can be connected to inflow duct 18 (shown in FIG. 1). Likewise, outflow duct 40 can be connected to outflow duct 20 (shown in FIG. 1). Like inflow duct 18 and outflow duct 20 (shown in FIG. 1), inflow vent 38 and outflow vent 40 are positioned away from each other. More specifically, inflow vent 38 and outflow vent 40 are generally on opposites sides (or halves) of actuator housing 33. Inflow vent 38 and outflow vent 40 can generally be located anywhere on the respective opposite sides of actuator housing 33. In the example shown in FIG. 2A, inflow vent 38 is on third side 60 and outflow vent 40 is on a portion of first side 56 that is proximal to fourth side 62. Alternatively, either or both inflow vent 38 and outflow vent 40 can be on top side 56 and proximal to third side 60 or fourth side 62, respectively. In other examples, inflow vent 38 and outflow vent 40 can be on third side 60 and fourth side 62, respectively, as shown and described with reference to FIGS. 3-4 below. As shown in FIG. 2A, inflow vent 38 is an opening through third side 60 of actuator housing 33 that is configured to allow a cooling fluid flowing along cooling flow path CF to enter actuator housing 33. Similarly, outflow vent 40 is an opening through first side 56 of actuator housing 33 that is configured to allow the cooling fluid (e.g., cooling fluid that has been heated up within actuator housing 33) to exit actuator housing 33.

Actuator housing 33 also includes outer layer 34 and inner layer 36. Outer layer 34 defines an exterior surface of actuator housing 33 that is exposed to the ambient temperature within actuation system 10. In some examples, outer layer 34 is a metal layer. Inner layer 36 is an insulation layer of actuator housing 33. More specifically, inner layer 36 is a ceramic fiber insulation layer. For example, inner layer 36 may be formed of one or more individual ceramic fiber boards. Inner layer 36 lines the sides of actuator housing 33 to define an interior surface of actuator housing 33. Inner layer 36 may be directly attached to outer layer 34, for example. In some examples, inner layer 36 forms an entirety of the interior surface of actuator housing 33 such that the entire interior surface of actuator housing 33 is covered by insulation. Inner layer 36 also surrounds and defines interior chamber 42 within actuator housing 33. That is, interior chamber 42 is bounded by inner layer 36. Interior chamber 42 is an internal cavity or space within actuator housing 33. Main body 25, motor 28, connector terminal 30, and all or a portion of electrical connector 32 of actuator 22 are arranged in interior chamber 42.

FIG. 2A shows first (or top) portion 64, second (or bottom) portion 66, third (or front) portion 68, and fourth (or rear) portion 70 of inner layer 36. Inner layer 36 can also include any number of portions (in addition to the four shown) to complete a three-dimensional enclosure around actuator 22. In some examples, first portion 64, second portion 66, third portion 68, and fourth portion 70 are each one or more separate pieces of ceramic fiber board that are joined together (e.g., at corners of actuator housing 33). In other examples, ones of first portion 64, second portion 66, third portion 68, and/or fourth portion 70 may be the same piece of ceramic fiber board that has been machined or shaped into different portions. In some examples, first portion 64 is thicker than the remaining portions of inner layer 36 to accommodate vent channels, vent openings, etc., as will be described in greater detail below. That is, first thickness T1 of first portion 64 can be greater than second thickness T2 (of second portion 58, third portion 60, and fourth portion 62, each of which can have about the same thickness). In one example, first thickness T1 of first portion is about 1 inch (2.54 cm), and second thickness T2 is about 0.5 inches (1.27 cm). In other examples, first thickness T1 and second thickness T2 are about the same.

FIG. 2A also shows further details of cooling flow path CF within actuator housing 33. As shown in FIG. 2A, inflow vent channel 72, inflow vent openings 74, interior chamber 42, outflow vent openings 78, and outflow vent channel 80 define sequential portions along cooling flow path CF through actuator housing 33. More specifically, first portion 64 of inner layer 36 provides inflow vent channel 72 therein, extending from inflow vent 38. Outflow vent channel 80 is also provided in first portion 64 of inner layer 36, extending from outflow vent 40. In some examples, each of inflow vent channel 72 and outflow vent channel 80 can be machined into, or hollowed out from, a single piece of ceramic fiber board that makes up first portion 64. Alternatively, inflow vent channel 72 and outflow vent channel 80 can be formed from a space or gap between two separate pieces of ceramic fiber board that make up first portion 64. Divider portion 76 is a solid portion of first portion 64 of inner layer 36 that is situated between inflow vent channel 72 and outflow vent channel 80. Divider portion 76 prevents a fluid from inflow vent channel 72 from passing directly to outflow vent channel 80.

First portion 64 of inner layer 36 also includes inflow vent openings 74 and outflow vent openings 78. Inflow vent openings 74 are perforations in first portion 64 that extend from inflow vent channel 72 to interior chamber 42. Likewise, outflow vent openings 78 are perforations in first portion 64 that extend from interior chamber 42 to outflow vent channel 80. FIG. 2A shows two inflow vent openings 74 and two outflow vent openings 78; however, other examples can include any number of inflow vent openings 74 and outflow vent openings 78, such as more or fewer inflow vent openings 74 and/or outflow vent openings 78. Moreover, inflow vent openings 74 and outflow vent openings 78 can be in any pattern on the interior surface of actuator housing 33, such as in a line or an array, for example. Inflow vent openings 74 and outflow vent openings 78 can also be any size and may all be the same size or may be different sizes.

In operation, inflow vent 38 receives a cooling fluid (e.g., from inflow duct 18, as shown in FIG. 1). The cooling fluid flows from inflow vent 38 through inflow vent channel 72. Inflow vent channel 72 communicates the cooling fluid from inflow vent 38 into interior chamber 42 via inflow vent openings 74. Additionally, divider portion 76 blocks fluid flow at the end of inflow vent channel 72 and forces the cooling fluid to turn down into interior chamber 42. As indicated by the arrow in FIG. 2A, the cooling fluid flows through interior chamber 42 over and across actuator 22. Within interior chamber 42, heat can be transferred to the cooling fluid. The heated cooling fluid then passes through outflow vent openings 78 into outflow vent channel 80. Divider 76 also prevents the cooling fluid from backflowing into inflow vent channel 72. Outflow vent channel 80 communicates the cooling fluid from interior chamber 42 to outflow vent 40. Outflow vent 40 discharges the cooling fluid from actuator housing 33 (e.g., to outflow duct 20, as shown in FIG. 1).

Because inflow vent 38 and outflow vent 40 are on opposite sides of actuator housing 33, the cooling fluid flows across actuator 22 to dissipate heat and cool actuator 22. Additionally, inner layer 36 formed of a ceramic fiber insulation thermally insulates actuator 22 and its components from high ambient temperatures. Actuator housing 33 including inner ceramic fiber insulation layer 36 and the vent system that provides cooling flow path CF (i.e., inflow vent 38, inflow vent channel 72, inflow vent openings 74, outflow vent openings 78, outflow vent channel 80, and outflow vent 40) is able to maintain an interior temperature of actuator housing 33 at a desired temperature, particularly in implementations where an ambient temperature outside of actuator housing 33 is very high, such as around 800°F (426.67°C), even if actuator 22 itself does not generate significant heat. Moreover, minimal flow may be required to maintain the desired temperature. In one example, actuator housing 33 is configured to maintain the interior temperature of actuator housing 33 between 200-250°F (93.33-121.11°C). In another example, actuator housing 33 is configured to maintain the interior temperature of actuator housing 33 at or below 249°F (120.56°C). The desired interior temperature of actuator housing 33 can be selected based on maximum operating temperature guidelines for a particular actuator 22.

Moreover, without inner ceramic fiber insulation layer 36, the ambient temperature could easily and rapidly penetrate the actuator housing and cause the interior, including an electric actuator contained therein, to heat up to the same temperature almost instantaneously. Ceramic fiber boards used for inner layer 36 provide a low cost, low weight, readily available solution for thermally insulating actuator 22 and its components in interior chamber 42 of actuator housing 33.

FIG. 3 is a schematic cross-sectional side view of actuator assembly 126. FIG. 3 shows controller 16 and actuator assembly 126, which includes actuator 22 (including actuator shaft 23, main body 25, motor 28, connector terminal 30, and electrical connector 32) and actuator housing 133. Actuator housing 133 includes outer layer 134, inner layer 136, inflow vent 138, outflow vent 140, interior chamber 142, actuator shaft opening 144, connector opening 146, connector receptacle 148, fastener openings 150, and fasteners 152 (including sleeves 154). FIG. 3 shows first (or top) side 156, second (or bottom) side 158, third (or front) side 160, and fourth (or rear) side 162 of actuator housing 133. Inner layer 136 also includes first (or top) portion 164, second (or bottom) portion 166, third (or front) portion 168, and fourth (or rear) portion 170. First portion 164 further includes inflow vent channel 172, inflow vent openings 174, outflow vent openings 178 and outflow vent channel 180. FIG. 3 also shows cooling flow path CF.

Actuator assembly 126 is an example of actuator assembly 12, and actuator housing 133 is an example of actuator housing 13, as shown in FIG. 1. Actuator housing 133 has a generally similar design to actuator housing 33 (shown in FIGS. 2A-2B), except actuator housing 133 does not include a divider portion and instead includes outflow vent 140 on fourth side 162 of actuator housing 133 rather than first side 156, such that outflow vent openings 178 and outflow vent channel 180 are formed in fourth portion 170 rather than first portion 164. Accordingly, both first portion 164 and fourth portion 170 can be thicker than the remaining portions of inner layer 136 to accommodate respective inflow and outflow vent channels 172, 180 and inflow and outflow vent openings 174, 178. For example, first portion 164 and fourth portion 170 can be about 1 inch (2.54 cm) thick, and second portion 166 and third portion 168 can be about 0.5 inches (1.27 cm) thick.

In operation, a cooling fluid flows along cooling flow path CF from inflow vent 138, through inflow vent channel 172 and into interior chamber 142 via inflow vent openings 174. From there, the cooling fluid flows from interior chamber 142 through outflow vent openings 178 into outflow vent channel 180 formed in fourth portion 170 of inner layer 136. Outflow vent channel 180 communicates the cooling fluid to outflow vent 140 in fourth side 162 of actuator housing 133.

Actuator housing 133 is another option compared to actuator housing 33 (shown in FIGS. 2A-2B) that represents flexibility in the design of actuator housing 13 (shown in FIG. 1) for different applications that may affect the desired flow characteristics or configuration of the actuator housing to fit with other external components, such as external ducting. For example, actuator housing 133 represents a different arrangement of inflow vent 138 and outflow vent 140 (and the corresponding inflow and outflow vent channels 172, 180 and inflow and outflow vent openings 174, 178) to accommodate a different exit orientation of cooling flow path CF.

FIG. 4 is a schematic cross-sectional side view of actuator assembly 226. FIG. 4 shows controller 16 and actuator assembly 226, which includes actuator 22 (including actuator shaft 23, main body 25, motor 28, connector terminal 30, and electrical connector 32) and actuator housing 233. Actuator housing 233 includes outer layer 234, inner layer 236, inflow vents 238 (including first inflow vent 23 8A and second inflow vent 23 8B), outflow vents 240 (including first outflow vent 240A and second outflow vent 240B), interior chamber 242, actuator shaft opening 244, connector opening 246, connector receptacle 248, fastener openings 250, and fasteners 252 (including sleeves 254). FIG. 4 shows first (or top) side 256, second (or bottom) side 258, third (or front) side 260, and fourth (or rear) side 262. Inner layer 236 also includes first (or top) portion 264, second (or bottom) portion 266, third (or front) portion 268, and fourth (or rear) portion 270. FIG. 4 also shows cooling flow path CF.

Actuator assembly 226 is an example of actuator assembly 12, and actuator housing 233 is an example of actuator housing 13, as shown in FIG. 1. Actuator housing 233 has a generally similar design to actuator housing 133 (shown in FIG. 3), except actuator housing 233 does not include inflow vent channel 172, inflow vent openings 174, outflow vent openings 178, or outflow vent channel 180. Actuator housing 233 additionally includes multiple inflow vents 238 and multiple outflow vents 240. In the example shown in FIG. 4, actuator housing 233 includes two inflow vents 238 and two outflow vents 240. Specifically, actuator housing 233 includes first inflow vent 238A, second inflow vent 238B, first outflow vent 240A, and second outflow vent 240B. In other examples, actuator housing 233 can include any number of inflow vents 238 and outflow vents 240, such as more than two inflow vents 238 and/or more than two outflow vents 240. In the example shown in FIG. 4, first inflow vent 23 8A and second inflow vent 238B are each on third side 160 of actuator housing 233. In other examples, first inflow vent 23 8A and second inflow vent 238B can each be on a portion of first side 156 that is proximal to third side 160. In yet other examples, first inflow vent 238A and second inflow vent 238B can be on different ones of third side 160 and first side 156. Similarly, in the example shown in FIG. 4, first outflow vent 240A and second outflow vent 240B are each on fourth side 162 of actuator housing 233. In other examples, first outflow vent 240A and second outflow vent 240B can each be on a portion of first side 156 that is proximal to fourth side 162. In yet other examples, first outflow vent 240A and second outflow vent 240B can be on different ones of fourth side 162 and first side 156.

As shown in FIG. 4, inflow vents 238 and outflow vents 240 can be openings through actuator housing 33 directly into interior chamber 242. Thus, a cooling fluid flows along cooling flow path CF from inflow vents 238 directly into interior chamber 142. From there, the cooling fluid flows from interior chamber 242 directly out through outflow vents 240. Alternatively, one or more of inflow vents 238 and/or outflow vents 240 could be connected to a corresponding vent channel (e.g., inflow vent channel 72, 172 or outflow vent channel 80, 180, as shown in FIGS. 2A and 3) and vent openings (e.g., inflow vent openings 74, 174 or outflow vent openings 78, 178, as shown in FIGS. 2A and 3) formed in the respective portion of inner layer 236.

Actuator housing 233 is another option compared to actuator housing 33 (shown in FIGS. 2A-2B) and actuator housing 133 (shown in FIG. 3) that represents flexibility in the design of actuator housing 13 (shown in FIG. 1) for different applications that may affect the desired flow characteristics or configuration of the actuator housing to fit with other external components, such as external ducting. For example, actuator housing 233 represents a different arrangement of multiple inflow vents 238 and multiple outflow vents 240 to accommodate a different inflow and outflow pattern of cooling flow path CF. Multiple inflow vents 238 and multiple outflow vents 240 can have a similar effect on flow in interior chamber 242 compared to the vent openings described previously with reference to FIGS. 2A and 3 but are formed through respective sides of actuator housing 233 without additional vent channels and vent openings being machined into inner layer 236. In this way, actuator housing 233 can have a simpler design, which may be more cost-effective and desirable in some applications.

### Discussion of Possible Embodiments

The following are non-exclusive descriptions of possible embodiments of the present invention.

An actuator assembly includes an actuator and an actuator housing. The actuator includes a main body portion and an actuator shaft. The actuator housing encloses the main body portion of the actuator. The actuator housing includes an outer layer, an inner ceramic fiber layer, an interior chamber that is bounded by the inner ceramic fiber layer, one or more inflow vents for receiving a first fluid, and one or more outflow vents for discharging the first fluid from the actuator housing.

The actuator assembly of the preceding paragraph can optionally include, additionally and/or alternatively, any one or more of the following features, configurations, and/or additional components:

The one or more outflow vents can be located on a generally opposite side of the actuator housing from the one or more inflow vents.

The inner ceramic fiber layer can include a first vent channel that extends from at least one of the one or more inflow vents and is connected to the interior chamber to communicate the first fluid from the at least one of the one or more inflow vents into the interior chamber.

The inner ceramic fiber layer can include a first plurality of vent openings, each vent opening of the first plurality of vent openings extending from the first vent channel to the interior chamber.

The inner ceramic fiber layer can include a second vent channel that extends from at least one of the one or more outflow vents and is connected to the interior chamber to communicate the first fluid from the interior chamber out the at least one of the one or more outflow vents.

The inner ceramic fiber layer can include a first plurality of vent openings, each vent opening of the first plurality of vent openings extending from the first vent channel to the interior chamber, and a second plurality of vent openings, each vent opening of the second plurality of vent openings extending from the second vent channel to the interior chamber.

The actuator housing can include at least two inflow vents.

The actuator housing can include at least two outflow vents.

The inner ceramic fiber layer can form an entirety of an inner surface of the actuator housing.

The outer layer can be a metal layer.

A thickness of the inner ceramic fiber layer can be about 0.5 to 1 inches (1.27 cm to 2.54 cm).

The actuator can be an electric actuator.

The actuator housing can be configured to maintain an interior temperature of the actuator housing below about 249°F (120.56°C).

A valve actuation system includes a valve arranged in a fluid flow path, the valve being movable between an open position and a closed position, an actuator, and an actuator housing. The actuator includes a main body portion and an actuator shaft that is coupled to the valve such that the actuator is configured to move the valve between the open position and the closed position. The actuator housing encloses the main body portion of the actuator. The actuator housing includes an outer layer, an inner ceramic fiber layer, an interior chamber that is bounded by the inner ceramic fiber layer, one or more inflow vents for receiving a first fluid, and one or more outflow vents for discharging the first fluid from the actuator housing.

The valve actuation system of the preceding paragraph can optionally include, additionally and/or alternatively, any one or more of the following features, configurations, and/or additional components:

The actuator housing can be connected to a valve housing of the valve.

The outer layer of the actuator housing can directly contact the valve housing on at least one side.

The inner ceramic fiber layer can include a first vent channel that extends from at least one of the one or more inflow vents and is connected to the interior chamber to communicate the first fluid from the at least one of the one or more inflow vents into the interior chamber and a first plurality of vent openings, each vent opening of the first plurality of vent openings extending from the first vent channel to the interior chamber.

The inner ceramic fiber layer can form an entirety of an inner surface of the actuator housing.

A method of thermally insulating an electric actuator includes constructing an actuator housing. The actuator housing includes an outer layer, an inner ceramic fiber layer, an interior chamber that is bounded by the inner ceramic fiber layer, one or more inflow vents for receiving a first fluid, and one or more outflow vents for discharging the first fluid from the actuator housing. The method further includes enclosing a main body portion of the electric actuator within the actuator housing and connecting the actuator housing to a valve housing.

The method of the preceding paragraph can optionally include, additionally and/or alternatively, any one or more of the following features, configurations, operations, and/or additional components:

Constructing the actuator housing can further include machining a vent channel into the inner ceramic fiber layer, the vent channel extending from at least one of the one or more inflow vents and being connected to the interior chamber to communicate the first fluid from the at least one of the one or more inflow vents into the interior chamber.

While the invention has been described with reference to an exemplary embodiment(s), it will be understood by those skilled in the art that various changes may be made without departing from the scope of the invention as defined by the claims.

## Claims

1. An actuator assembly comprising:
an actuator (22) including a main body portion and an actuator shaft (23); and
an actuator housing (13) that encloses the main body portion of the actuator, the actuator housing including:
an outer layer (34);
an inner ceramic fiber layer (36);
an interior chamber (42) that is bounded by the inner ceramic fiber layer;
one or more inflow vents (38) for receiving a first fluid; and
one or more outflow vents (40) for discharging the first fluid from the actuator housing.

2. The actuator assembly of claim 1, wherein the one or more outflow vents are located on a generally opposite side of the actuator housing from the one or more inflow vents.

3. The actuator assembly of claim 1 or 2, wherein the inner ceramic fiber layer includes a first vent channel (72) that extends from at least one of the one or more inflow vents and is connected to the interior chamber to communicate the first fluid from the at least one of the one or more inflow vents into the interior chamber.

4. The actuator assembly of claim 3, wherein the inner ceramic fiber layer further includes a first plurality of vent openings, each vent opening of the first plurality of vent openings (74) extending from the first vent channel to the interior chamber.

5. The actuator assembly of claim 3, wherein the inner ceramic fiber layer includes a second vent channel (80) that extends from at least one of the one or more outflow vents and is connected to the interior chamber to communicate the first fluid from the interior chamber out the at least one of the one or more outflow vents, and optionally wherein the inner ceramic fiber layer further includes:
a first plurality of vent openings (74), each vent opening of the first plurality of vent openings extending from the first vent channel to the interior chamber; and
a second plurality of vent openings (80), each vent opening of the second plurality of vent openings extending from the second vent channel to the interior chamber.

6. The actuator assembly of any preceding claim, wherein the actuator housing includes at least two inflow vents and/or wherein the actuator housing includes at least two outflow vents.

7. The actuator assembly of any preceding claim, wherein the inner ceramic fiber layer forms an entirety of an inner surface of the actuator housing.

8. The actuator assembly of any preceding claim, wherein the outer layer is a metal layer.

9. The actuator assembly of any preceding claim, wherein a thickness of the inner ceramic fiber layer is about 0.5 to 1 inches (1.27 cm to 2.54 cm).

10. The actuator assembly of any preceding claim, wherein the actuator is an electric actuator.

11. The actuator assembly of any preceding claim, wherein the actuator housing is configured to maintain an interior temperature of the actuator housing below about 249°F (120.56°C).

12. A valve actuation system, the valve actuation system comprising:
a valve (24) arranged in a fluid flow path, the valve being movable between an open position and a closed position; and
an actuator assembly as claimed in any preceding claim, and further.wherein :
the actuator shaft (23) is coupled to the valve such that the actuator is configured to move the valve between the open position and the closed position.

13. The valve actuation system of claim 12, wherein the actuator housing is connected to a valve housing (15) of the valve, and optionally wherein the outer layer of the actuator housing directly contacts the valve housing on at least one side.

14. A method of thermally insulating an electric actuator, the method comprising:
constructing an actuator housing, the actuator housing including:
an outer layer (34);
an inner ceramic fiber layer (36);
an interior chamber (42) that is bounded by the inner ceramic fiber layer;
one or more inflow vents (38) for receiving a first fluid; and
one or more outflow vents (40) for discharging the first fluid from the actuator housing;
enclosing a main body portion of the electric actuator within the actuator housing (13); and
connecting the actuator housing to a valve housing (15).

15. The method of claim 14, wherein constructing the actuator housing further includes machining a vent channel (72) into the inner ceramic fiber layer, the vent channel extending from at least one of the one or more inflow vents and being connected to the interior chamber to communicate the first fluid from the at least one of the one or more inflow vents into the interior chamber.
